# DEMANDE DE BREVET EUROPEEN

(11) **EP 1 956 061 A1**
(43) Date de publication de la demande: **13.08.2008**
(21) Numéro de dépôt: 08101307.0
(22) Date de dépôt: 06.02.2008
(51) Int. Cl.: C09D 133/12

(54) **Résine plastifiante fluide et utilisation d'une telle résine**

(30) Priorité: 12.02.2007 FR 0753180; 12.10.2007 FR 0707179
(71) Demandeur: Primo-Pack, 7030 Mateur (TN)
(72) Inventeur: Palazzolo, Rocco, 91800, BRUNOY (FR); Mejladi, Moktar, 45120, CEPOY (FR)
(74) Mandataire: Esselin, Sophie

(57) **Abrégé**

L'invention a pour objet une résine fluide plastifiante destinée à être enduite caractérisée en ce qu'elle comporte un copolymère de méthacrylate de méthyle et de méthacrylate de butyle dilué dans un solvant adapté, ledit solvant comprenant en outre :
- du xylène ;
- de l'acétate de 2-méthoxy-1-méthyléthyle ;
- de l'éthyl benzène ;
- du 4- methyl-2-pentanone ;
- de l'acetate de N-Butyle ;
- de l'alkyl-benzyl ester.

L'invention a aussi pour objet l'utilisation d'une telle résine pour la protection de surfaces exposées aux intempéries, à la lumière ou à des agents chimiques.

## Description

La présente invention a pour objet une nouvelle résine plastifiante fluide permettant notamment de fournir aux consommateurs un moyen leur permettant de protéger eux-mêmes et d'une manière très simple une large gamme de surfaces pouvant être exposées aux intempéries, à la lumière ou à des agents chimiques.

Le bricolage est devenu l'un des loisirs préférés de nos contemporains, et avec l'augmentation du temps libre, de plus en plus nombreux sont ceux qui se lancent dans des travaux qui étaient auparavant réservés aux professionnels.

Dans ce contexte, la présente invention propose au grand public d'utiliser une résine plastifiante fluide particulière pour la protection de surfaces les plus diverses.

Selon l'invention, cette résine plastifiante fluide destinée à être enduite est caractérisée en ce qu'elle comporte un copolymère de méthacrylate de méthyle et de méthacrylate de butyle dilué dans un solvant adapté, ledit solvant comprenant en outre :
- du xylène ;
- de l'acétate de 2-méthoxy-1-méthyléthyle ;
- de l'éthyl benzène ;
- du 4- methyl-2-pentanone ;
- de l'acetate de N-Butyle ;
- de alkyl-benzyl ester.

Avantageusement, l'alky-benzyl ester peut comprendre entre 7 et 9 atomes de carbone.

Selon une variante de l'invention la résine peut comprendre en outre de l'acétate d'éthyle.

Selon une première variante de l'invention, la résine plastifiante utilisée conformément à l'invention peut avantageusement avoir la composition pondérale suivante :
- copolymère de méthacrylate de méthyle et de méthacrylate de butyle : 30 à 60 %
- xylène : 10 à 20 %
- acétate de 2 méthoxy-1-méthyléthyle : 2 à 3 %
- éthyl benzène : 2 à 3,5 %
- 4-méthyl-2-pentanone : 10 à 25 %
- acétate d'éthyle : 5 à 12 %
- acétate de N butyle : 5 à 20 %
- alkyl-benzyl ester : 4 à 6 %.

Selon une variante de l'invention, la résine peut comprendre un solvant naphta aromatique léger.

La résine plastifiante utilisée conformément à l'invention peut avantageusement avoir la composition pondérale suivante :
- copolymère de méthacrylate de méthyle et de méthacrylate de butyle : 30 à 60 %;
- xylène : 5 à 15 % ;
- acétate de 2 méthoxy-1-méthyléthyle : 5 à 15 % ;
- éthyl benzène : 1 à 2,5 % ;
- 4-méthyl-2-pentanone : 10 à 25 % ;
- acétate de N butyle : 5 à 20 % ;
- alkyl-benzyl ester : 5 à 10 % ;
- solvant naphta aromatique léger : 5 à 15 %.

Selon cette variante, la résine comporte un naphta aromatique léger permettant une application au pinceau de la résine améliorée.

Cette seconde variante de résine selon l'invention permet de disposer d'une résine réellement facile à enduire, en raison notamment d'un pourcentage relativement élevé d'acétate de 2 méthoxy-1-méthyléthyle .

Elle présente en outre l'avantage de permettre une très bonne adhérence en raison d'un pourcentage optimisé d'alkyl benzil esther.

Selon l'invention, la résine plastifiante fluide peut en outre renfermer différents additifs tels que des agents anti bulles, des agents anti rayures ou des agents stabilisants.

Outre sa facilité d'application, une telle résine plastifiante fluide se distingue par son aspect transparent et invisible et son pouvoir imperméabilisant, antioxydant et antistatique.

Elle présente en outre l'avantage de résister au rayonnement ultraviolet, de ne pas être sujette à des phénomènes de jaunissement dans le temps, et de ne pas se fissurer ni se craqueler, ce, même si elle est appliquée sur des substrats souples tels que des tissus.

Selon une autre caractéristique de l'invention, on applique la résine plastifiante fluide sur la surface à protéger à l'aide d'un rouleau ou d'un pinceau, ce qui s'avère particulièrement pratique pour les consommateurs.

Un litre de la résine plastifiante fluide utilisée conformément à l'invention permet de recouvrir et par suite de protéger une surface de l'ordre de 20 m².

On obtient ainsi sur cette surface un film qui sèche relativement rapidement ; par suite l'application d'une seconde couche de résine peut être effectuée environ deux heures après l'application de la première couche.

La résistance maximum du film n'est toutefois atteinte que vingt quatre heures après son application.

L'invention permet donc d'appliquer sur une large gamme de surfaces un film de protection se distinguant en particulier par des caractéristiques d'élasticité, de dureté et de brillance remarquables et en outre par une absence de toxicité après séchage.

Ce film de protection présente de plus l'avantage d'être inaltérable dans le temps, ce jusqu'à des températures intermittentes de 180°C ou - 50°C, et de résister aux agents atmosphériques, aux embruns marins, aux rayons ultraviolets, aux acides d'utilité domestique, aux détergents, aux hydrocarbures et aux huiles lubrifiantes.

La seule limitation à la mise en oeuvre de la résine plastifiante fluide utilisée conformément à l'invention est liée au fait qu'elle ne résiste pas à l'acétone et aux solvants similaires.

Conformément à l'invention, cette résine plastifiante fluide peut avantageusement être utilisée pour la protection de surfaces en bois, pierre, métal, tissu, papier, cuir, matières plastiques rigides, carrelage, ciment ou céramique.

Une telle résine est à titre d'exemple particulièrement appropriée à être appliquée sur des surfaces en chrome, fer, aluminium, cuivre, laiton ou zinc ou sur des supports bitumineux.

De telles surfaces peuvent être réalisées aussi bien en des matériaux poreux qu'en des matériaux déjà vernis, peints ou émaillés ; la résine plastifiante fluide utilisée conformément à l'invention est en particulier compatible avec la majorité des peintures ou vernis.

Il est toutefois à noter que cette résine ne peut pas être appliquée sur les supports siliconés, le polystyrène expansé, les tissus en fibres synthétiques et les matériaux plastiques mous.

Selon une autre caractéristique de l'invention, la résine plastifiante fluide peut être utilisée pour étancher des supports et des surfaces telles que murs, sols et plafonds.

Il est ainsi possible d'obtenir des films de protection rendant des joints étanches à 100 % et de colmater toutes les infiltrations d'eau et de liquide.

Selon une autre caractéristique de l'invention, la résine plastifiante fluide peut être utilisée pour la protection de surfaces métalliques contre l'oxydation et les graffitis.

Selon une autre caractéristique de l'invention, la résine plastifiante fluide peut être utilisée pour l'imperméabilisation de surfaces en toile telles que tentes, parasols ou stores et leur protection contre le rayonnement ultraviolet.

De telles surfaces en toile peuvent ainsi conserver durablement leur couleur d'origine sans faire l'objet de phénomènes de jaunissement.

Selon une autre caractéristique de l'invention, la résine plastifiante fluide peut être utilisée pour la protection du mobilier de jardin contre les intempéries et à la mauvaise saison.

Il est ainsi possible de laisser un tel mobilier à l'extérieur tout l'hiver sans avoir à le ranger.

Selon une autre caractéristique de l'invention, la résine plastifiante fluide peut être utilisée pour la protection de coques de bateau contre l'eau de mer.

Une telle résine peut de manière plus générale être utilisée pour protéger des produits quelconques notamment métalliques contre les effets néfastes de l'eau de mer.

Il est à noter que la résine plastifiante fluide utilisée conformément à l'invention peut également être appliquée à l'aide d'un pistolet à peinture, mais qu'à cet effet elle doit être diluée à 10 % avec un diluant sec.

## Revendications

1. Résine fluide plastifiante destinée à être enduite **caractérisée en ce qu'**elle comporte un copolymère de méthacrylate de méthyle et de méthacrylate de butyle dilué dans un solvant adapté, ledit solvant comprenant en outre :
- du xylène ;
- de l'acétate de 2-méthoxy-1-méthyléthyle ;
- de l'éthyl benzène ;
- du 4- methyl-2-pentanone ;
- de l'acetate de N-Butyle ;
- de l'alkyl-benzyl ester.

2. Résine fluide plastifiante destinée à être enduite selon la revendication 1,
**caractérisée en ce qu'**elle comprend en outre de l'acétate d'éthyle.

3. Résine fluide plastifiante destinée à être enduite selon la revendication 2,
**caractérisée en ce qu'**elle comporte les pourcentages pondéraux suivants :
- copolymère de méthacrylate de méthyle et de méthacrylate de butyle : 30 à 60 %;
- xylène : 10 à 20 % ;
- acétate de 2 méthoxy-1-méthyléthyle : 2 à 3 % ;
- éthyl benzène : 2 à 3,5 % ;
- 4-méthyl-2-pentanone : 10 à 25 % ;
- acétate d'éthyle : 5 à 12 % ;
- acétate de N butyle : 5 à 20 % ;
- alkyl-benzyl ester : 4 à 6 %.

4. Résine fluide plastifiante destinée à être enduite selon la revendication 1, **caractérisée en ce qu'**elle comprend en outre un solvant naphta aromatique léger.

5. Résine fluide plastifiante destinée à être enduite selon la revendication 4, **caractérisée en ce qu'**elle comporte les pourcentages pondéraux suivants :
- copolymère de méthacrylate de méthyle et de méthacrylate de butyle : 30 à 60 % ;
- xylène : 5 à 15 % ;
- acétate de 2 méthoxy-1-méthyléthyle : 5 à 15 % ;
- éthyl benzène : 1 à 2,5 % ;
- 4-méthyl-2-pentanone : 10 à 25 % ;
- acétate de N butyle : 5 à 20 % ;
- alkyl-benzyl ester : 5 à 10 % ;
- solvant naphta aromatique léger : 5 à 15 %.

6. Résine fluide plastifiante destinée à être enduite selon la revendiction 1, **caractérisée en ce qu'**elle comprend en outre des additifs tels que des agents anti bulles, des agents anti rayures ou des agents stabilisants.

7. Utilisation d'une résine plastifiante fluide selon l'une des revendications 1 à 6, pour la protection de surfaces exposées aux intempéries, à la lumière ou à des agents chimiques.

8. Utilisation selon la revendication 7, **caractérisée en ce que** l'on applique la résine plastifiante fluide sur la surface à protéger à l'aide d'un rouleau ou d'un pinceau.

9. Utilisation selon l'une des revendications 7 ou 8, **caractérisée en ce que** les surfaces protégées sont en bois, métal, tissu, papier, cuir, matières plastiques rigides, carrelage, ciment ou céramique.

10. Utilisation d'une résine plastifiante fluide selon l'une des revendications 1 à 6, pour étancher des supports et des surfaces telles que murs, sols et plafonds.

11. Utilisation d'une résine plastifiante fluide selon l'une des revendications 1 à 6, pour la protection de surfaces métalliques contre l'oxydation et les graffitis.

12. Utilisation d'une résine plastifiante fluide selon l'une des revendications 1 à 6, pour l'imperméabilisation de surfaces en toile telles que tentes, parasols ou stores et leur protection contre le rayonnement UV.

13. Utilisation d'une résine plastifiante fluide selon l'une des revendications 1 à 6, pour la protection du mobilier de jardin contre les intempéries et à la mauvaise saison.

14. Utilisation d'une résine plastifiante fluide selon l'une des revendications 1 à 6, pour la protection de coques de bateau contre l'eau de mer.
